# EUROPEAN PATENT APPLICATION

(11) **EP 2 239 485 A2**
(43) Date of publication of application: **13.10.2010**
(21) Application number: 10158612.1
(22) Date of filing: 31.03.2010
(51) Int. Cl.: F16K 1/02, F16K 3/24

(54) **Valve**

(30) Priority: 08.04.2009 FI 20090144 U
(71) Applicant: R.R. Kainulainen Oy, 53650 Lappeenranta (FI)
(72) Inventor: Kainulainen, Raimo, 53650 Lappeenranta (FI)
(74) Representative: Kaukonen, Juha Veikko

(57) **Abstract**

The invention relates to a valve for freezable liquids, comprising a body (1) and a stem (2) moving in the body, as well as closing members provided in the body (1) and in the stem (2) for opening and closing a flow of water, a nozzle (5) wherefrom liquid flows out of the valve when the valve is open, as well as means (7, 8) for opening and closing the valve.

The stem (2) of the valve is provided with a discharge projection (15) directed towards the nozzle (5) and having substantially the shape and size of the cross-section of the nozzle (5), whereby when the valve is closed, the stem (2) and the discharge projection (15) substantially fill the space in which the liquid flows when the valve is open.

## Description

### BACKGROUND OF THE INVENTION

The invention relates to a valve for freezable liquids, the valve comprising a body and a stem moving in a stem space provided in the body, as well as closing members provided in the body and in the stem for opening and closing a flow of liquid, such as water, a connection for feeding liquid to the valve, and, at an end of the stem space of the valve in a direction of motion of the stem, a nozzle wherefrom liquid flows out of the valve when the valve is open, as well as moving means for moving the stem of the valve in its longitudinal direction between closed and open positions.

### BRIEF DESCRIPTION OF THE INVENTION

On account of fire safety and many other reasons, various materials, such as wood used in forestry, which is usually stored outdoors, have to be wetted at regular intervals. For the wetting, various hoses and pipe systems are generally used, as well as nozzle valves for spraying water such that the nozzle valves spread the water appropriately over a large area. Typically, these pipe systems and hoses are not always put away when the weather turns cold, which means that they are easily frozen. The freezing of nozzle valves in particular often damages the valves. To replace and repair the valves, in turn, means extra work and costs. In addition to water, similar valves are used for handling other freezable liquids, and, similarly, the freezing of a liquid also causes problems therein. Valves are also used in various water-crafts, such as boats and ships, wherein the freezing of the valves would cause damages.

An object of the present invention is to provide a valve for freezable liquids wherein problems caused by freezing may be reduced as compared with known solutions.

A valve according to the invention is **characterized in that** the stem of the valve has a cross-section that has substantially the shape and size of the stem space, and that the stem of the valve is provided with a discharge projection directed towards the nozzle and having substantially the shape and size of the cross-section of the nozzle, whereby when the valve is closed, the stem and the discharge projection substantially fill the space inside the valve in which the liquid flows when the valve is open.

An idea underlying the invention is that an end of the stem of the valve that is located on the side of an outlet opening of the valve, e.g. a nozzle valve, is provided with a projection which has the shape of the outlet opening and substantially the size of the outlet opening and which extends all the way to the outer surface of the valve. Upon closing the valve, the projection protrudes along with the stem into the outlet opening of the valve and pushes the liquid therein out of the opening, in which case the valve remains intact also when the temperature drops below zero degree Celsius and when the liquid, such as water, freezes. A further idea underlying the invention is that the stem of the valve has the shape and size of the stem space. In such a case, the stem and the discharge projection fill the space inside the valve to which the liquid has access when the valve is open. Upon closing the valve, the stem and the discharge projection push the liquid almost entirely out of the valve, so no freezing of the liquid can break the valve.

### BRIEF DESCRIPTION OF THE FIGURES

The invention will be described in closer detail in the accompanying drawings, in which
Figure 1 schematically shows an embodiment of a valve according to the invention and its longitudinal section when the valve is open, and
Figure 2 schematically shows the longitudinal section of the valve according to Figure 1 when the valve is closed.

### DETAILED DESCRIPTION OF THE INVENTION

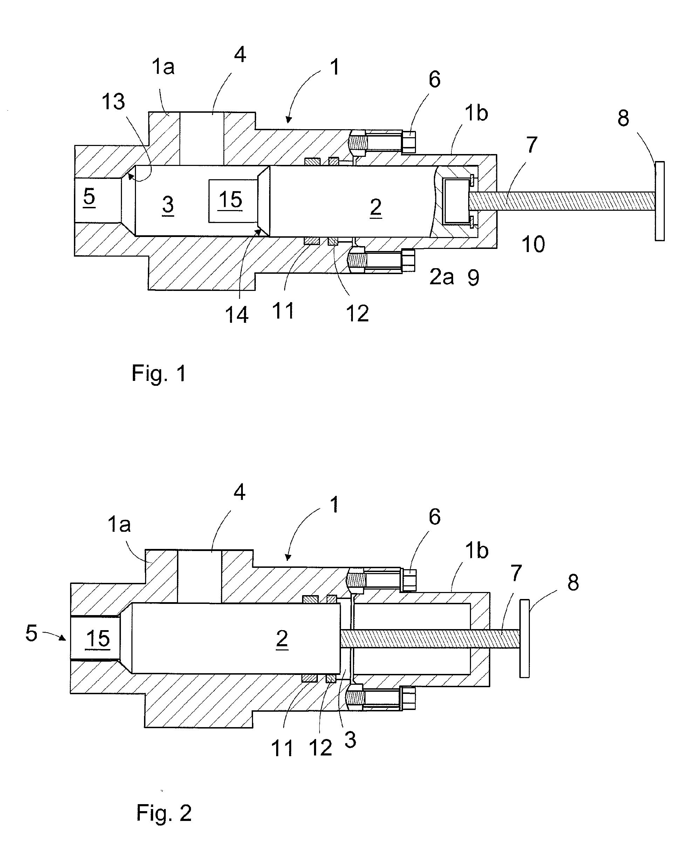

Figure 1 schematically shows an embodiment of a valve according to the invention as sectioned in a longitudinal direction of the valve.

As far as the assembly and functionality of the valve are concerned, a body 1 of the valve is most preferably formed from body parts 1 a and 1b, and a stem 2 of the valve moves inside the body 1. In its longitudinal direction, the stem 2 moves between an open position and a closed position in a stem space 3 provided in the body. In the case shown in Figure 1, the valve is open and the stem 2 is thus in the open position. Most preferably, the stem and the stem space have circular cross-sections, in which case their shape is mainly cylindrical; however, a different cross-section is also possible.

Liquid, i.e. water when wood is wetted, is fed from a connection 4 to the valve, the liquid spreading over the area to be wetted via an outlet opening, i.e. a nozzle 5, of the valve. The nozzle 5 is a channel or an aperture whose diameter is smaller than that of the stem 2 and the stem space 3 and into which the liquid, such as water, flows via the stem space 3. The body of the valve is assembled by fastening the body parts 1 a and 1 b to one another by fastening screws 6 arranged in the longitudinal direction of the stem.

In order to move the stem 2 in its longitudinal direction, a conventional closing screw 7, for instance, is used which is turned by means of a handle 8. The closing screw 7 is engaged by a shoulder 9 which extends to a cylindrical locking space 2a provided at an end of the valve stem 2 on the side of the closing screw and which is locked to the stem by a locking ring 10 so that it cannot exit the space 2a.

The stem 2 of the valve is sealed in relation to the body 1 by seals 11 and 12 in order to prevent water from flowing from the stem cylinder 3 to the other parts of the valve and from breaking the valve as it freezes. Of course, instead of two seals, one seal or more seals may be used, depending on the structure and materials used.

For closing the valve, as a closing member, the body 1 of the valve is by way of example provided with a conical closing surface 13 and, similarly, as a closing member, the stem 2 of the valve is provided with a conical second closing surface 14 which is pressed against the closing surface 13 of the body 1. When the closing surfaces 13 and 14 are in contact with one another, the valve is closed and no water can flow via the connection 4 through the valve. Of course, instead of the conical closing surfaces, different known closing solutions, such as seals or the like, may also be used.

Figure 2 schematically shows the valve according to Figure 1 as sectioned in the longitudinal direction of the stem and the stem 2 of the valve in a closed position. This figure shows how the closing surfaces 13 and 14 are in contact with one another, in which case no water can flow through the valve. The figure further shows how a discharge projection 15 of the stem 2 located at an end facing the nozzle 5 has protruded into the nozzle 5 and, consequently, emptied it of water. At the same time, the stem 2 has pushed away the water from the stem space 3 and filled it. Thus, the inside of the valve is left with only a minimal amount of water, and the freezing thereof cannot break the valve.

The diameter of the discharge projection 15 is slightly smaller than the diameter of the nozzle 5, whereby a small clearance is provided between the surfaces thereof. This is useful because it allows the conical closing surfaces 13 and 14 to settle tightly against one another irrespective of possible production tolerances. In addition, the water pushed by the stem 2 is allowed to be discharged out of the valve.

Most preferably, the discharge projection 15 and the nozzle 5 have a circular cross-section and cylindrical shape and reside coaxially in relation to the stem space 3 and the stem 2, respectively. However, they may have different cross-sections and shapes and also reside non-symmetrically in relation to the stem space and the stem.

Above in the descriptions and drawings, the invention has been shown only by way of example, but it is by no means restricted thereto. The point is that the stem of the valve is provided with a discharge projection which extends to the outlet opening, i.e. nozzle, of the valve and which has substantially the size and length of the nozzle of the valve, the discharge projection emptying the nozzle of the valve of liquid, such as water, upon closing the valve. The stem of the valve may be transferred between the closed and open positions either in a manner known per se using manual solutions or by employing different mechanical or automatic power devices. Similarly, the body of the valve may be manufactured in many different ways and from many different parts, as long as access of water from the stem cylinder into any other space of the valve except for the nozzle is prevented by seals or other structures. Of course, the valve may also be used in a normal manner for controlling the flow of water by moving the stem into a desired position in the longitudinal direction of the valve by means of a closing screw. The parts of the valve may be manufactured from appropriate materials that differ from one another in different parts. Valves according to the invention may be used in connection with all freezable liquids and as bottom valves for ships and boats, for instance.

## Claims

1. A valve for freezable liquids, the valve comprising a body (1) and a stem (2) moving in a stem space (3) provided in the body, as well as closing members provided in the body (1) and in the stem (2) for opening and closing a flow of liquid, such as water, a connection (4) for feeding liquid to the valve, and, at an end of the stem space (3) of the valve in a direction of motion of the stem (2), a nozzle (5) wherefrom liquid flows out of the valve when the valve is open, as well as moving means (7, 8) for moving the stem (2) of the valve in its longitudinal direction between closed and open positions, **characterized in that** the stem (2) of the valve has a cross-section that has substantially the shape and size of the stem space (3), and that the stem (2) of the valve is provided with a discharge projection directed towards the nozzle (5) and having substantially the shape and size of the cross-section of the nozzle (5), whereby when the valve is closed, the stem (2) and the discharge projection (15) substantially fill the space inside the valve in which the liquid flows when the valve is open.

2. A valve as claimed in claim 1, **characterized in that** when the valve is closed, the discharge projection (15) extends substantially all the way to an outer surface of the valve.

3. A valve as claimed in claim 1 or 2, **characterized in that** the stem (2) has a cylindrical shape.

4. A valve as claimed in any one of the preceding claims, **characterized in that** the discharge projection (15) resides coaxially in relation to the stem (2).

5. A valve as claimed in any one of the preceding claims, **characterized in that** the discharge projection (15) has a cylindrical shape.

6. A valve as claimed in any one of the preceding claims, **characterized in that** the closing means consist of substantially conical closing surfaces (13) and (14) which are provided in the body (1) and in the stem (1) of the valve, respectively, at an end facing the nozzle and which, in the closed position of the valve, reside against one another.
